Europäisches Patentamt

European Patent Office

Office européen des brevets

(19)

(11) Numéro de publication : **0 182 686**
**B1**

(12) **FASCICULE DE BREVET EUROPÉEN**

(45) Date de publication du fascicule du brevet :
29.07.87

(51) Int. Cl.⁴ : **B 60 H   1/00**

(21) Numéro de dépôt : 85402048.4

(22) Date de dépôt : 22.10.85

(54) **Dispositif de commande d'un vérin de déplacement d'un organe mobile entre deux positions, en particulier pour une installation de chauffage ou de climatisation de l'habitacle d'un véhicule.**

(30) Priorité : 08.11.84 FR 8417037

(43) Date de publication de la demande :
28.05.86 Bulletin 86/22

(45) Mention de la délivrance du brevet :
29.07.87 Bulletin 87/31

(84) Etats contractants désignés :
DE IT

(56) Documents cités :
FR-A- 2 195 944
FR-A- 2 375 523
FR-A- 2 536 124
GB-A- 2 064 825
US-A- 3 731 729
US-A- 4 262 738
PATENTS ABSTRACTS OF JAPAN, vol. 4, no. 161 (M-40) [643], 11 novembre 1980, page 37M40

(73) Titulaire : **VALEO**
**64, avenue de la Grande Armée**
**F-75848 Paris Cédex 17 (FR)**

(72) Inventeur : **Bouvot, Jean-François**
**2, rue des Grands Prés Le Mesnil Sevin**
**F-78720 Dampierre (FR)**

(74) Mandataire : **Ramey, Daniel et al**
**Cabinet NETTER 40, rue Vignon**
**F-75009 Paris (FR)**

EP 0 182 686 B1

## Description

L'invention concerne un dispositif de commande d'un vérin de déplacement d'un organe mobile entre deux positions limites, du type dans lequel le vérin est alimenté en fluide sous pression par un distributeur.

Un tel dispositif est utilisable en particulier dans l'industrie automobile, par exemple pour la commande du déplacement d'un volet faisant partie d'une installation de chauffage et de ventilation ou de climatisation de l'habitacle d'un véhicule automobile. Par rapport aux commandes classiques dans lesquelles le volet est déplacé en rotation autour d'un axe par un câble relié à un organe de commande monté sur le tableau de bord du véhicule, un dispositif de commande du déplacement du volet au moyen d'un vérin alimenté en fluide sous pression par un distributeur présente l'avantage que, en cas de panne ou d'arrêt de la source de fluide sous pression, le vérin est automatiquement mis à l'échappement et le volet associé est ramené dans une position privilégiée ou position de sécurité. En outre, l'effort exercé sur l'organe de commande du distributeur au tableau de bord du véhicule est beaucoup plus régulier et beaucoup plus faible que dans le cas d'une commande directe par câble.

On connaît déjà des dispositifs de commande de ce type, dans lesquels le distributeur de fluide sous pression comprend un premier élément mobile qui est solidaire de l'organe à déplacer (par exemple d'un volet) ou de la tige de piston du vérin de commande, et un deuxième élément mobile qui est monté à étanchéité sur le premier pour définir avec lui des chambres reliées à la source de fluide sous pression et à l'échappement, le premier élément mobile du distributeur étant relié par un conduit à l'alimentation du vérin, tandis que le second élément mobile est déplaçable par rapport au premier au moyen d'une commande directe par câble depuis le tableau de bord. L'organe à déplacer, par exemple un volet, est alors du type suiveur, c'est-à-dire que son déplacement est directement proportionnel au déplacement du moyen de commande sur le tableau de bord, ou synchronisé constamment avec le déplacement de ce moyen de commande (FR-A- 2 536 124).

Il est toutefois nécessaire, dans certains cas, que le déplacement du volet ne soit pas directement proportionnel au déplacement du moyen de commande sur le tableau de bord, le volet devant par exemple effectuer un trajet entre ses positions limites selon une loi de déplacement prédéterminée lorsque le moyen de commande sur le tableau de bord est déplacé d'une de ses positions limites à l'autre.

L'invention a notamment pour but d'apporter une solution simple, efficace et peu coûteuse à ce problème.

Elle a également pour objet un dispositif de commande de ce type, qui permet de déplacer deux volets selon des mouvements différents à partir d'une commande unique sur le tableau de bord.

L'invention propose à cet effet un dispositif de commande du type précité, caractérisé en ce que le deuxième élément du distributeur est associé à étanchéité à un troisième élément fixe, avec lequel il définit au moins deux chambres séparées de façon étanche, dont l'une est reliée en permanence à une source de fluide sous pression et dont l'autre est reliée en permanence à l'échappement, par l'intermédiaire du troisième élément du distributeur.

Ce dispositif permet de dissocier complètement le mouvement du moyen de commande manuelle et le mouvement de l'organe, par exemple du volet, déplacé par le vérin. On peut ainsi déplacer l'organe mobile, par exemple le volet, selon un mouvement relativement complexe lorsque la commande est déplacée dans une seule direction en passant par des positions prédéterminées qui peuvent être avantageusement équidistantes les unes des autres, ce qui permet de simplifier pour l'utilisateur la commande de l'installation.

Selon d'autres caractéristiques de l'invention, les éléments mobiles du distributeur sont des disques coaxiaux montés à rotation autour de leur axe commun, ou bien des plaques déplaçables en translation les unes par rapport aux autres dans une direction déterminée.

Selon une autre caractéristique de l'invention, le deuxième élément du distributeur forme l'organe d'entraînement du deuxième élément d'un second distributeur de même type, qui est propre à commander au moyen d'un second vérin le déplacement d'un second organe mobile entre deux positions limites.

Dans le cas où les éléments mobiles des distributeurs sont des disques coaxiaux montés à rotation autour de leur axe commun, les surfaces périphériques extérieures des deuxièmes éléments mobiles des distributeurs sont formés avec des dentures de pignons en prise l'une avec l'autre.

Ainsi, une commande unique permet d'entraîner, depuis le tableau de bord, le deuxième élément mobile d'un distributeur en rotation autour de son axe, dans un sens ou dans l'autre, et ce mouvement de rotation est transmis, par les dentures en prise, au deuxième élément mobile de l'autre distributeur.

Cette commande unique permet ainsi de déplacer les deux organes mobiles selon des mouvements différents et non synchronisés.

Dans la description qui suit, faite à titre d'exemple, on se réfère aux dessins annexés, dans lesquels :

La figure 1 est une vue schématique en perspective éclatée d'un dispositif de commande selon l'invention ;

La figure 2 est une vue schématique en coupe axiale d'un distributeur de fluide selon l'invention ;

La figure 3 est une vue, selon la flèche III de la figure 2, des trois éléments de ce distributeur ;

Les figures 4, 5 et 6 sont des vues semblables à la figure 3, illustrant le fonctionnement de ce distributeur ;

Les figures 7 à 11 sont des vues semblables à la figure 3, mais illustrant le fonctionnement d'une variante de réalisation du distributeur selon l'invention ;

Les figures 12 à 16 sont des vues schématiques en coupe illustrant le fonctionnement d'une autre variante de réalisation d'un distributeur selon l'invention ;

Les figures 17 à 25 sont des vues schématiques en coupe illustrant le fonctionnement d'une autre variante de l'invention.

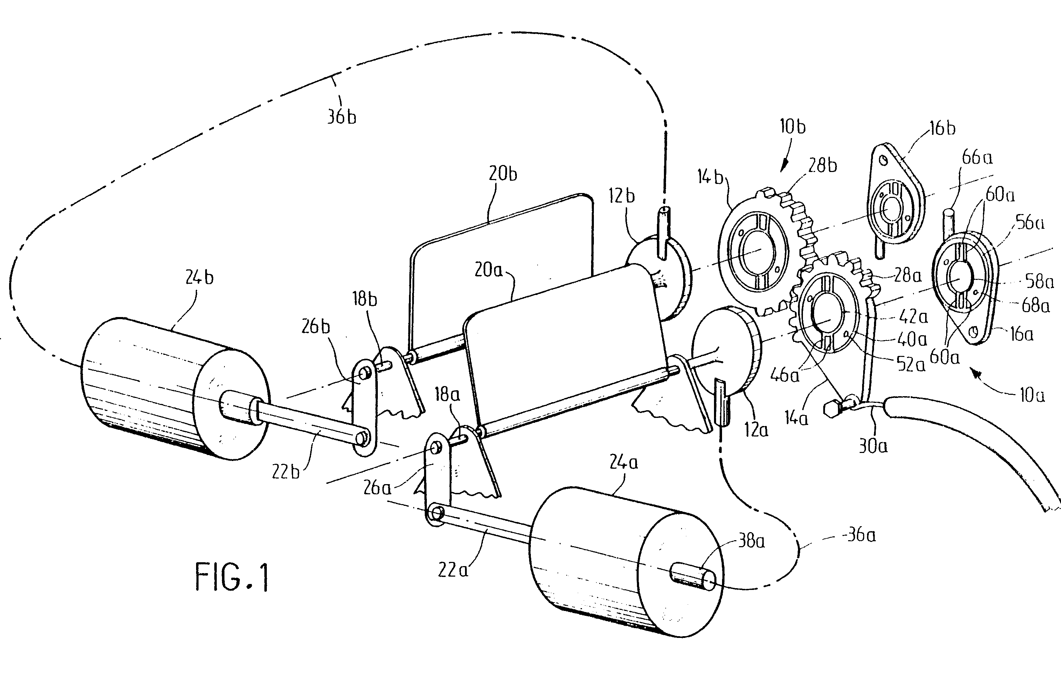

On se réfère d'abord aux figures 1 à 3, représentant un dispositif selon l'invention, appliqué à la commande du déplacement de deux volets dans une installation de chauffage et de ventilation ou de climatisation d'un habitacle de véhicule automobile.

Dans ce cas, la source de fluide sous pression est une source d'air en dépression, c'est-à-dire d'air à une pression inférieure à la pression atmosphérique, cette source étant disponible sur le moteur à combustion interne équipant le véhicule automobile.

Ce dispositif de commande comprend deux distributeurs de fluide sous pression 10a et 10b, représentés en vue éclatée et formés de trois éléments 12a, 14a, 16a et 12b, 14b, 16b, respectivement. Les premiers éléments 12a et 12b des distributeurs sont chacun solidaires de l'arbre de rotation 18a, 18b d'un volet 20a, 20b respectivement qui est entraîné en rotation par la tige de piston 22a, 22b d'un vérin simple effet 24a, 24b au moyen d'un bras 26a, 26b respectivement, dont une extrémité est solidaire de l'arbre de rotation correspondant et dont l'autre extrémité est articulée sur l'extrémité de la tige de piston correspondante.

Les trois éléments des distributeurs de fluide sous pression 10a et 10b ont une forme générale de disques circulaires plats, les premier et deuxième éléments étant mobiles en rotation autour de l'axe de rotation de l'arbre du volet correspondant, tandis que les troisièmes éléments 16a et 16b des distributeurs sont fixes.

Les deuxièmes éléments 14a et 14b des distributeurs sont formés, sur une partie de leur périphérie, avec une denture de pignon 28a, 28b respectivement, ces deux dentures étant en prise comme représenté en figure 1. Le deuxième élément 14a du distributeur de fluide 10a comprend un appendice ou doigt excentré par rapport à l'axe de rotation et par lequel il est relié à l'extrémité d'un câble de commande 30a dont l'autre extrémité, non représentée, est reliée à un moyen de commande sur le tableau de bord du véhicule.

Les troisièmes éléments 16a et 16b des distributeurs, qui sont fixes, sont également pourvus d'un doigt ou appendice excentré qui permet de les fixer dans une position angulaire déterminée autour de l'axe de rotation du volet correspondant 20a, 20b.

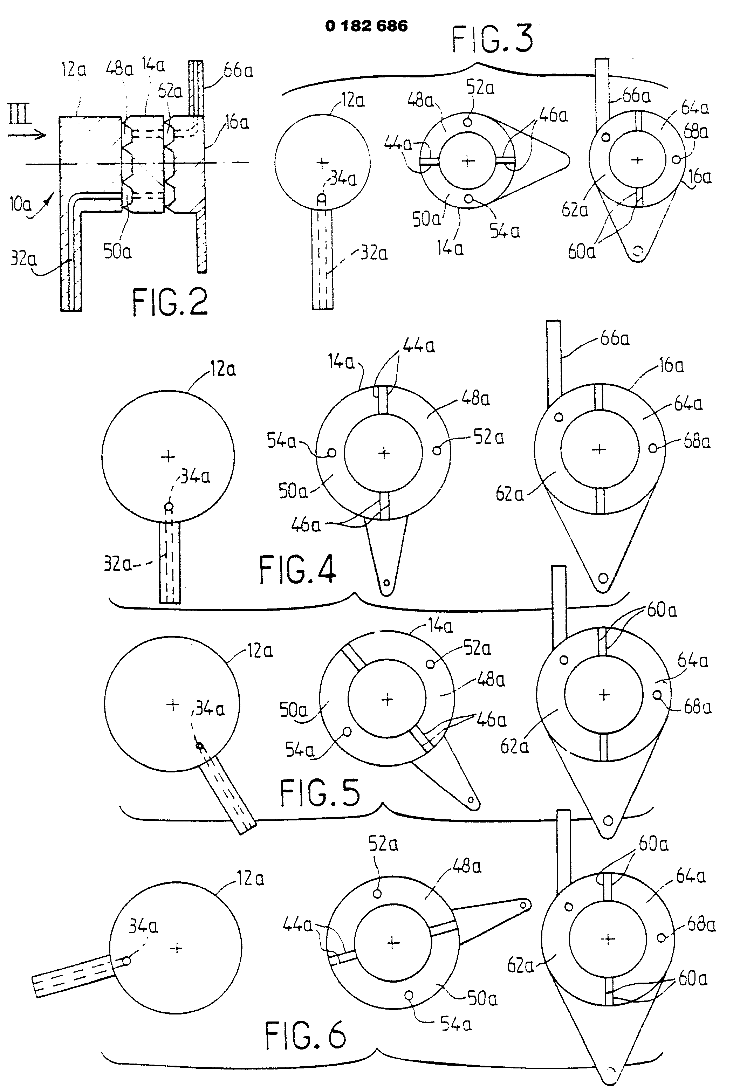

Comme on le voit mieux en figure 2, qui est une vue en coupe axiale du distributeur 10a à l'état assemblé, les trois éléments de chaque distributeur sont montés coaxialement à étanchéité les uns sur les autres de façon à déterminer entre eux des chambres séparées de façon étanche et qui sont reliées sélectivement les unes aux autres en fonction des positions angulaires des deux éléments mobiles du distributeur.

Le premier élément mobile 12a du distributeur est formé avec un conduit 32a dont une extrémité débouche par un orifice 34a sur la face circulaire de cet élément qui se trouve en regard de la face circulaire correspondante du deuxième élément mobile 14a, et dont l'autre extrémité est reliée par un conduit 36a à l'embout 38a d'alimentation ou d'échappement du vérin 24a. La face du deuxième élément mobile 14a, qui se trouve en regard du premier élément mobile 12a, est formée avec deux lèvres d'étanchéité circulaires et concentriques 40a et 42a, qui sont centrées sur l'axe de rotation, et avec des lèvres doubles d'étanchéité 44a et 46a, qui sont radiales et qui s'étendent entre les lèvres circulaires concentriques 40a et 42a, de façon à définir, avec la face circulaire en regard du premier élément 12a, deux chambres 48a et 50a qui sont séparées de façon étanche l'une de l'autre par les lèvres d'étanchéité précitées. L'orifice 34a du conduit 32a du premier élément mobile débouche entre les deux lèvres concentriques 40a et 42a, c'est-à-dire soit dans la chambre 48a, soit dans la chambre 50a, soit encore entre deux lèvres radiales 44a ou 46a voisines dont l'écartement est supérieur au diamètre de l'orifice 34a.

Les chambres 48a et 50a formées sur une face du deuxième élément mobile 14a sont reliées à l'autre face de cet élément mobile par un trou traversant 52a, 54a, respectivement, parallèle à l'axe de rotation.

La face du troisième élément 16a du distributeur, qui est en regard du deuxième élément 14a, est également formée avec deux lèvres d'étanchéité circulaires et concentriques 56a et 58a, centrées sur l'axe de rotation, et avec deux lèvres doubles d'étanchéité 60a, qui sont radiales et s'étendent entre les lèvres concentriques 56a et 58a. Ces lèvres d'étanchéité, appliquées sur la face en regard du deuxième élément mobile 14a, définissent avec celle-ci deux chambres 62a et 64a, séparées de façon étanche l'une de l'autre, la chambre 62a étant reliée par un conduit 66a du troisième élément à la source de fluide sous pression, tandis que l'autre chambre 64a est reliée à l'échappement par un trou traversant 68a du troisième élément 16a du distributeur.

La structure de l'autre distributeur 10b est, pour l'essentiel, identique à celle du distributeur 10a, seules les positions relatives des diverses chambres les unes par rapport aux autres pouvant être modifiées d'un distributeur à l'autre, comme on le verra dans ce qui suit, de façon à ce que les mouvements des volets 20a et 20b ne soient pas identiques.

Dans les figures 3 à 11, les trois éléments du distributeur ont été représentés de façon simplifiée, pour faciliter la clarté de l'exposé.

On va maintenant décrire, en référence aux figures 4 à 6, le fonctionnement d'une première forme de réalisation de l'invention, concernant le distributeur 10a associé au vérin 24a et au volet 20a.

Dans cette forme de réalisation, les lèvres d'étanchéité radiales du deuxième élément et du troisième élément du distributeur sont diamétralement opposées, de sorte que les chambres 48a, 50a, 62a, 64a de ce distributeur ont sensiblement la même étendue angulaire.

On part de la position représentée en figure 4, qui est une position stable, l'orifice 34a du conduit 32a d'alimentation du vérin 24a se trouvant entre deux nervures radiales voisines 46a du second élément 14a et étant ainsi isolé de la source de fluide sous pression et de l'échappement. Dans cette position, la chambre 50a formée entre les éléments 12a et 14a communique par le trou 54a avec la chambre 62a qui est formée entre le deuxième élément 14a et le troisième élément 16a du distributeur et qui est reliée à la source de fluide sous pression. L'autre chambre 48a, formée entre le premier et le deuxième élément du distributeur communique par le trou 52a avec l'autre chambre 64a formée entre le deuxième et le troisième élément du distributeur, et reliée par le trou 68a à l'échappement.

Si, à partir de cette position, le deuxième élément 14a du distributeur est déplacé par la commande manuelle dans la position représentée en figure 5, l'orifice 34a du conduit d'alimentation du vérin sort de la zone d'isolement formée entre les deux nervures radiales 46a voisines du deuxième élément 14a et débouche dans la chambre 50a reliée par le trou 54a et la chambre 62a à la source de fluide sous pression. Le vérin 24a est alors alimenté en fluide sous pression (c'est-à-dire en air à une pression inférieure à la pression atmosphérique dans le cas d'un véhicule automobile), de sorte que la tige de piston 22a est rétractée à l'intérieur du vérin 24a et que le volet 20a tourne avec le premier élément du distributeur 12a dans le même sens que le deuxième élément 14a de ce distributeur, jusqu'à ce que le débouché de l'orifice 34a du conduit d'alimentation du vérin revienne dans la zone d'isolement formée entre les deux lèvres radiales voisines 46a. Le déplacement du volet est, dans ces conditions, identique à celui du second élément 14a du distributeur et est donc directement proportionnel au déplacement du moyen de commande sur le tableau de bord, qui est transmis à l'élément 14a par le câble de commande 30a.

Cette proportionnalité des mouvements subsiste jusqu'à ce que la rotation du deuxième élément 14a du distributeur soit telle que le trou 54a de ce deuxième élément, qui se déplace dans la chambre 62a formée entre le deuxième et le troisième élément, dépasse les nervures radiales 60a du troisième élément et arrive alors dans la chambre 64a reliée en permanence à l'échappement par le trou 68a du troisième élément du distributeur. Le vérin 24a est alors mis à l'échappement, au lieu d'être alimenté en fluide sous pression, de sorte que la tige de piston 22a sort du vérin et fait tourner le volet 20a en sens contraire. Cette rotation se poursuit jusqu'à la butée du volet 20a sur une paroi fixe, ou bien sortie complète de la tige de piston 22a du vérin 24a. La position correspondante du premier élément 12a du distributeur est représentée en figure 6. L'arrêt du mouvement du volet peut également se produire lorsque l'orifice 34a du conduit d'alimentation du vérin revient dans la zone d'isolement formée entre les deux lèvres radiales voisines 44a du second élément du distributeur, ce qui est le cas représenté en figure 6.

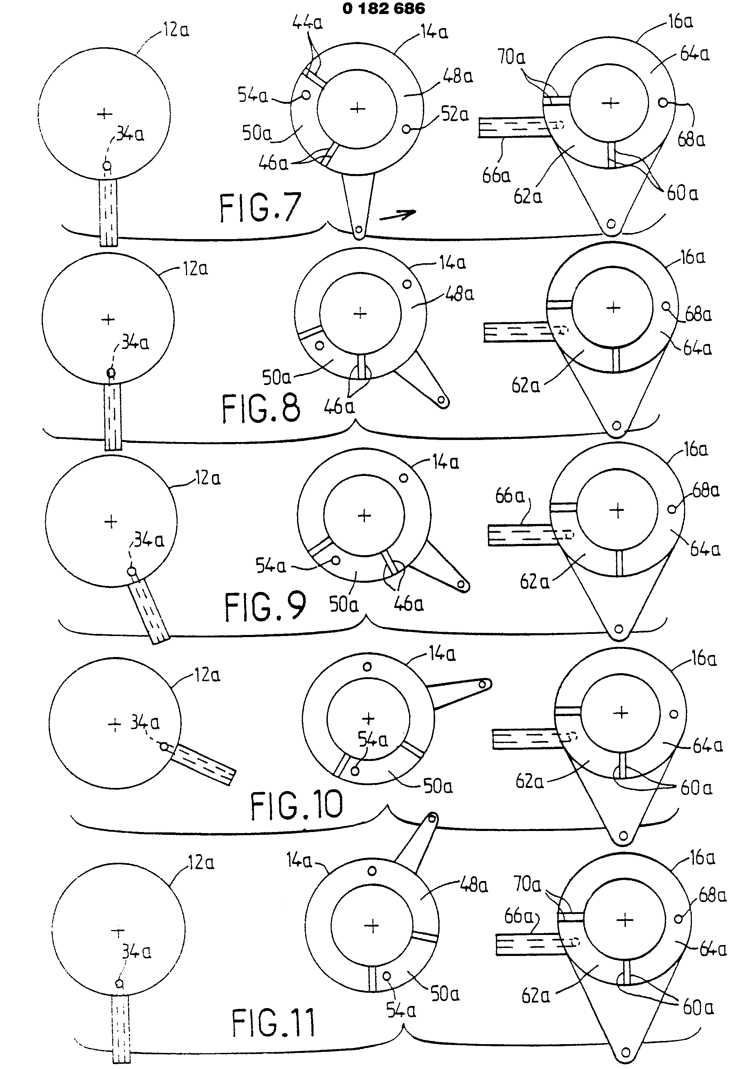

On se réfère maintenant aux figures 7 à 11, qui illustrent le fonctionnement d'une autre forme de réalisation d'un distributeur selon l'invention.

Cette forme de réalisation diffère de celle des figures 4 à 6 en ce que, sur le deuxième élément 14a du distributeur, les lèvres radiales d'étanchéité qui séparent les chambres 48a et 50a ne sont plus diamétralement opposées, la chambre 50a ayant une étendue angulaire largement inférieure à celle de la chambre 48a. En outre, sur le troisième élément 16a du distributeur, la chambre 64a reliée à l'échappement a une étendue angulaire largement supérieure à celle de la chambre 62a reliée à la source de fluide sous pression, en étant séparée de celle-ci, d'une part par deux lèvres radiales 60a voisines et, d'autre part, par deux autres lèvres radiales 70a voisines qui ne sont pas diamétralement opposées aux lèvres 60a.

Dans la position représentée en figure 7, le volet et donc le premier élément 12a du distributeur se trouvent dans une position limite correspondant à la mise à l'échappement du vérin 24a. L'orifice 34a du conduit d'alimentation du vérin débouche dans la chambre 48a formée entre le premier élément 12a et le deuxième élément 14a du distributeur, cette chambre 48a étant reliée par le trou 52a à la chambre 64a formée entre le deuxième et le troisième élément du distributeur, et qui est reliée à l'échappement par le trou 68a du troisième élément du distributeur.

A partir de la position représentée en figure 7, la rotation du deuxième élément 14a du distributeur, provoquée par le déplacement du moyen de commande sur le tableau de bord et s'effectuant dans le sens de la flèche représentée en figure 7, ne produit aucun effet jusqu'à ce que les lèvres radiales d'étanchéité 46a du deuxième élément 14a soient en regard de l'orifice 34a du conduit d'alimentation du vérin. Cette position est représentée en figure 8.

Si la rotation de l'élément 14a se poursuit dans le même sens (figure 9), l'orifice 34a du conduit d'alimentation du vérin débouche alors dans la chambre 50a formée entre le premier et le deuxième élément du distributeur, cette chambre 50a communiquant par le trou 54a avec la chambre 62a reliée à la source de fluide sous pression. Le vérin 24a est alors alimenté en fluide sous pression (c'est-à-dire en air à une pression inférieure à la pression atmosphérique), ce qui provoque le retrait de la tige de piston 22a à l'intérieur du vérin et la rotation du volet 20a et du premier élément 12a du distributeur dans le même sens que le deuxième élément 14a du distributeur, jusqu'à ce que l'orifice 34a du conduit d'alimentation du vérin revienne dans la zone d'isolement formée entre les deux lèvres radiales 46a du second élément du distributeur. Pendant cette phase, le déplacement du volet est identique au déplacement du second élément 14a du distributeur et est donc proportionnel au déplacement du moyen de commande sur le tableau de bord.

Il en est ainsi jusqu'à la position angulaire du second élément 14a du distributeur qui est représentée en figure 10, position pour laquelle le trou traversant 54a du deuxième élément 14a débouche dans la zone d'isolement formée entre les deux lèvres radiales 60a du troisième élément 16a du distributeur.

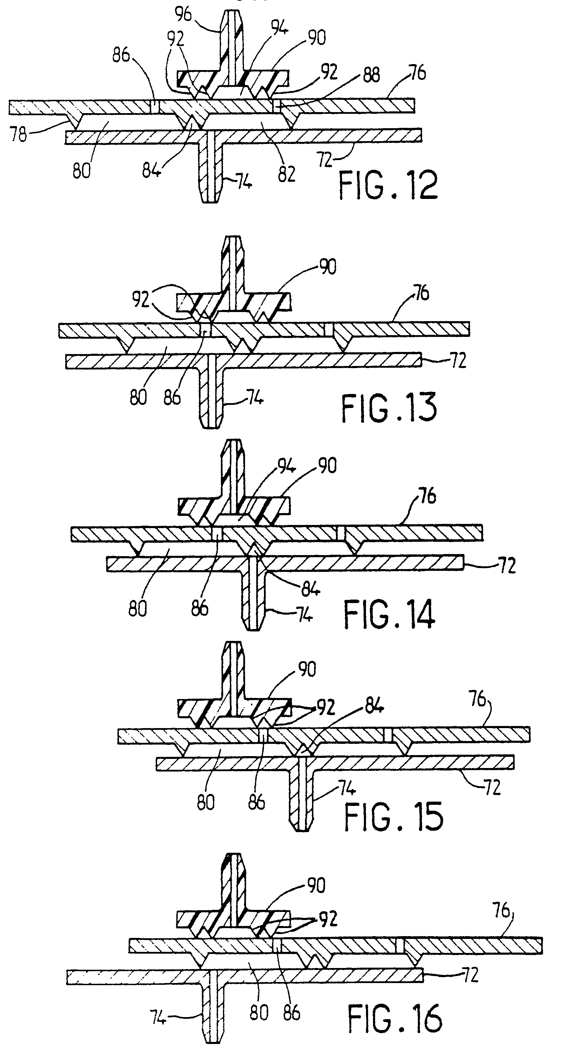

Si, à partir de cette position, la rotation du deuxième élément 14a se poursuit dans le même sens, comme représenté en figure 11, le trou traversant 54a de ce deuxième élément relie la chambre 50a à la chambre 64a de mise à l'échappement, de sorte que l'orifice 34a du conduit d'alimentation du vérin, qui débouche dans la chambre 50a, provoque la mise à l'échappement du vérin. Le volet 20a et le premier élément 12a du distributeur sont alors entraînés en rotation en sens contraire du deuxième élément 14a du distributeur, et reviennent dans leur position limite initiale, correspondant à celle de la figure 7.

On comprend que, dans le dispositif de la figure 1, l'un des distributeurs peut avoir une structure du type de celle représentée dans les figures 4 à 6, tandis que l'autre distributeur peut avoir une structure du type de celle représentée dans les figures 7 à 11. Dans ce cas, les mouvements des deux volets sont synchronisés uniquement pour une partie de la course du moyen de commande sur le tableau de bord, et sont totalement dissociés l'un de l'autre pour le reste de la course de ce moyen de commande.

On se réfère maintenant aux figures 12 à 16, représentant une variante de réalisation d'un distributeur selon l'invention, dans laquelle les éléments du distributeur ne sont plus des disques coaxiaux dont deux sont mobiles en rotation autour de leur axe commun, mais sont constitués par des plaques planes empilées dont les deux premières sont déplaçables en translation dans leur plan.

Plus précisément, le distributeur comprend un premier élément 72 comportant un embout tubulaire 74 débouchant sur sa face supérieure et destiné à être relié à l'orifice d'alimentation du vérin de déplacement du volet. Le second élément 76 du distributeur est formé, sur sa face en regard du premier élément 72, avec des lèvres d'étanchéité 78 qui définissent, avec la face supérieure du premier élément 72, deux chambres 80 et 82 séparées de façon étanche l'une de l'autre par une lèvre double définissant une zone d'isolement 84 ayant une dimension supérieure au diamètre du débouché de l'embout tubulaire 74. Deux trous 86 et 88 sont formés à travers le second élément 76 pour déboucher dans les chambres 80 et 82 respectivement.

Le troisième élément 90 du distributeur est une plaque fixe appliquée sur la face supérieure du second élément 76 et munie de lèvres doubles d'étanchéité 92 qui définissent une chambre 94 reliée par un embout tubulaire 96 à la source de fluide sous pression et située entre deux chambres d'isolement.

Les plaques 72 et 76 sont mobiles en translation parallèlement à leur plan, comme indiqué par la flèche en figure 12, la plaque 72 étant déplacée par la tige de piston du vérin associé, tandis que la plaque 76 est déplacée par le câble de commande relié aux moyens de commande sur le tableau de bord.

Dans la position représentée en figure 12, l'embout tubulaire 74 de la première plaque 72, relié à l'alimentation du vérin, débouche dans la chambre 82 qui est reliée par le trou 88 à l'air libre, c'est-à-dire à l'échappement. Le vérin est donc à l'échappement et la position représentée de la première plaque 72 est une position limite, correspondant à une position limite du volet à déplacer.

Si, à partir de la position représentée en figure 12, la seconde plaque 76 est déplacée vers la droite comme représenté en figure 13, l'embout tubulaire 74 de la première plaque 72 est tout d'abord obturé par la chambre d'isolement 84, puis débouche dans la chambre 80 dont le trou 86 débouche lui-même dans l'intervalle entre deux lèvres voisines 92 de la troisième plaque 86 et est ainsi isolé de l'échappement ou de la source de fluide sous pression. En conséquence, ce déplacement de la seconde plaque 76 ne produit aucun effet sur le vérin, et le volet n'est pas entraîné. La première plaque 72 reste dans la même position qu'en figure 12.

Si, à partir de la position représentée en figure 13, la seconde plaque 76 est déplacée légèrement vers la droite comme représenté en figure 14, le trou 86 de la chambre 80 débouche alors dans la chambre 94 reliée à la source de fluide sous pression. Le vérin est alors alimenté en fluide sous pression par la chambre 80 et l'embout tubulaire 74 et provoque alors un déplacement vers la droite de la première plaque 72, jusqu'à ce que le débouché de l'embout tubulaire 74 parvienne dans la zone d'isolement 84. On obtient ainsi, pour un faible déplacement de la seconde plaque 76, un déplacement beaucoup plus important de la première plaque 72, et donc du volet associé.

Si, à partir de la position représentée en figure 14, la plaque 76 est encore déplacée vers la droite par le moyen de commande, on obtient alors un déplacement de la première plaque 72 qui est identique à celui de la deuxième plaque 76, jusqu'à ce que celle-ci soit amenée dans la position représentée en figure 15, où le trou 86 de la deuxième plaque 76 se trouve alors à nouveau entre deux lèvres voisines 92 de la troisième plaque 90 et est isolé de l'échappement et de la source de fluide sous pression.

Si, à partir de la position représentée en figure 15, la deuxième plaque 76 est encore déplacée vers la droite comme représenté en figure 16, le trou 86 de cette deuxième plaque débouche à l'air libre, donc à l'échappement, le vérin est mis à l'échappement par la chambre 80 et l'embout tubulaire 74, et la première plaque 72 est déplacée vers la gauche, jusqu'en butée, c'est-à-dire jusqu'à revenir à sa position initiale des figures 12 et 13. Il en résulte que le volet correspondant est également ramené dans sa position initiale.

Bien entendu, le déplacement de la seconde plaque 76 en sens inverse, c'est-à-dire vers la gauche sur le dessin, depuis la position de la figure 16, provoque un mouvement de la première plaque 72, et donc du volet associé, qui est l'inverse de celui qui vient d'être décrit, la plaque 72 revenant dans sa position de la figure 15, puis dans celle de la figure 14 et enfin dans celle des figures 12 et 13.

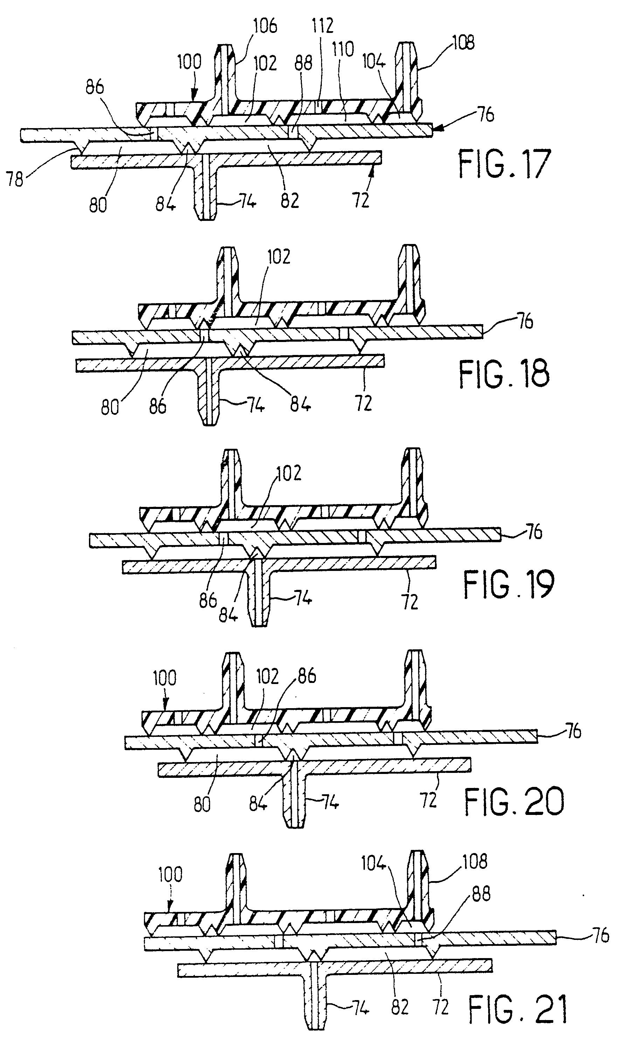

On se réfère maintenant aux figures 17 à 25 qui représentent une autre variante de réalisation d'un distributeur selon l'invention, dont les deux premiers éléments 72 et 76 sont identiques à ceux du distributeur représenté dans les figures 12 à 16.

Le troisième élément 100 du distributeur est une plaque fixe munie de lèvres doubles d'étanchéité qui, appliquées sur la face supérieure du second élément 76, définissent deux chambres 102 et 104 reliées à la source de dépression par des embouts tubulaires 106 et 108 respectivement, et une chambre 110, située entre les deux chambres 102 et 104 et qui est reliée à l'échappement par un trou traversant 112.

Comme dans le mode de réalisation précédent, les plaques 72 et 76 sont mobiles en translation parallèlement à leur plan, la plaque 72 étant déplacée par la tige de piston du vérin associé, la plaque 76 étant déplacée par un câble relié à un moyen de commande sur le tableau de bord.

Dans la position de la figure 17, l'embout tubulaire 74 de la plaque 72 est relié à l'échappement par la chambre 82, le trou 88, la chambre 110 et le trou 112. Le vérin associé est donc à l'échappement et la position représentée dans la plaque 72 est une position limite, correspondant à une position limite du volet à déplacer, qui se trouve être en butée.

Si, à partir de cette position, la plaque 76 est déplacée vers la droite comme représenté en figure 18, jusqu'à ce que le trou 86 vienne dans une chambre d'isolement limitant la chambre 102, l'embout tubulaire 74 de la première plaque 72 est obturé par la chambre d'isolement 84, puis débouche dans la chambre 80 dont le trou 86 est d'abord relié à l'échappement avant de venir dans ladite chambre d'isolement située à la limite de la chambre 102. Le vérin n'est donc pas alimenté en dépression, la position du volet ne change pas, et la plaque 72 reste dans la même position qu'en figure 17.

Si ensuite la deuxième plaque 76 est encore déplacée vers la droite, comme représenté en figure 19, le trou 86 débouche dans la chambre 102 reliée à la source de dépression, et le vérin est alimenté en dépression. Il en résulte un déplacement vers la droite de la première plaque 72, jusqu'à ce que le débouché de l'embout tubulaire 74 parvienne dans la chambre d'isolement 84. On obtient alors, pour un faible déplacement de la plaque 76, un déplacement beaucoup plus important de la plaque 72 et donc du volet associé.

Si ensuite la deuxième plaque 76 est encore déplacée vers la droite, comme représenté dans les figures 20 et 21, la première plaque 72 est déplacée vers la droite de la même façon que la deuxième plaque 76 jusqu'à venir en fin de course dans la position représentée en figure 21, qui correspond à une butée du volet dans sa position limite. On remarquera que, dans la position de la figure 21, l'autre trou 88 de la deuxième plaque 76 débouche dans l'autre chambre 104 reliée à la source de dépression par l'embout tubulaire 108.

Ainsi, si la plaque 76 est déplacée en sens inverse, vers la gauche, le vérin est alimenté en dépression par l'embout 74, la chambre 82, le trou 88 et la chambre 104, et la plaque 72 se déplace vers la droite, si elle n'est pas déjà dans sa position limite correspondante.

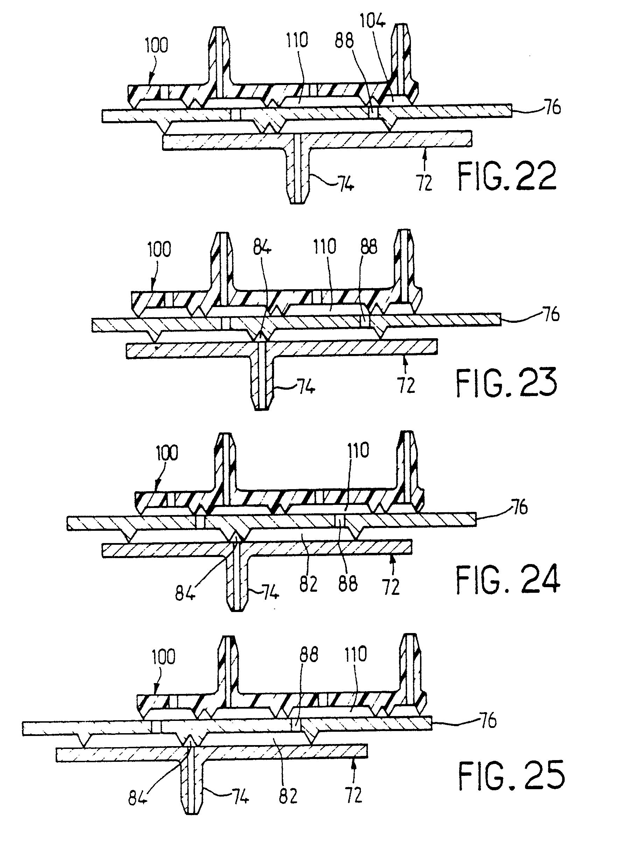

Cette tendance au déplacement vers la droite de la première plaque 72 lorsque la deuxième plaque 76 est déplacée vers la gauche se poursuit jusqu'à ce que le trou 88 de la deuxième plaque 76 débouche dans la zone d'isolement formée entre la chambre 104 et la chambre 110 (figure 22).

Si la deuxième plaque 76 est encore déplacée vers la gauche (figure 23), le trou 88 de cette plaque débouche dans la chambre 110 reliée à l'échappement. Le vérin est ainsi mis à l'échappement et déplace la première plaque 72 vers la gauche, jusqu'à ce que l'embout tubulaire 74 vienne déboucher dans la zone d'isolement 84.

A partir de cette position, si la plaque 76 est encore déplacée vers la gauche, la première plaque 72 suit le déplacement de la deuxième plaque 76 (figures 24 et 25), jusqu'à venir dans sa position limite à gauche, correspondant à la position de la figure 17.

On voit que le distributeur des figures 17 à 25 permet de déplacer le volet associé selon des mouvements qui ne sont pas identiques ou inverses l'un de l'autre lorsque l'élément de commande est déplacé dans un sens, puis dans l'autre.

## Revendications

1. Dispositif de commande d'un vérin (24a) de déplacement d'un organe mobile (20a) entre deux positions limites, le vérin étant alimenté en fluide sous pression par un distributeur (10a) comprenant un premier élément (12a) relié à la tige de piston (22a) du vérin avec l'organe mobile (20a) pour être déplaçable en synchronisme avec celui-ci, un deuxième élément (14a) monté à étanchéité sur le premier élément (12a), une commande (30a) de déplacement du deuxième élément (14) par rapport au premier élément (12a), les deux éléments définissant entre eux des chambres (48a, 50a), séparées de façon étanche qui, d'une part, sont propres à être reliées sélectivement à une source de fluide sous pression et à l'échappement par l'intermédiaire du deuxième élément (14a) et qui, d'autre part, sont propres à être reliées à un conduit d'alimentation (36a) du vérin par l'intermédiaire du premier élément (12a), caractérisé en ce que le deuxième élément (14a) du distributeur est associé à étanchéité à un troisième élément (16a) fixe, avec lequel il définit au moins deux chambres (62a, 64a) séparées de façon étanche, dont l'une est reliée en permanence à la source de fluide sous pression et dont l'autre est en permanence reliée à l'échappement, par l'intermédiaire du troisième élément (16a).

2. Dispositif selon la revendication 1, caractérisé en ce que les chambres (48a, 50a) définies entre le premier élément (12a) et le deuxième élément (14a) du distributeur sont reliées aux chambres (62a, 64a) définies entre le deuxième élément (14a) et le troisième élément (16a) du distributeur par des trous (52a, 54a) traversant le deuxième élément (14a).

3. Dispositif selon la revendication 1 ou 2, caractérisé en ce que les chambres précitées comprennent également des chambres isolées de façon étanche de la source de fluide sous pression et de l'échappement.

4. Dispositif selon l'une des revendications précédentes, caractérisé en ce que les éléments mobiles du distributeur sont des disques coaxiaux montés à rotation autour de leur axe commun (18a).

5. Dispositif selon l'une des revendications précédentes, caractérisé en ce que le deuxième élément (14a) du distributeur forme l'organe d'entraînement du deuxième élément (14b) d'un second distributeur (10b) de même type, propre à commander, au moyen d'un second vérin (24b), le déplacement d'un second organe (20b) mobile entre deux positions limites.

6. Dispositif selon l'ensemble des revendications 4 et 5, caractérisé en ce que les surfaces périphériques des deuxièmes éléments mobiles (14a et 14b) des distributeurs sont formés avec des dentures de pignons (28a, 28b), en prise l'une avec l'autre.

7. Dispositif selon l'une des revendications précédentes, caractérisé en ce que le ou chaque organe mobile (20a, 20b) est un volet d'une installation de chauffage et de ventilation ou de climatisation d'un habitacle de véhicule automobile.

8. Dispositif selon l'une des revendications précédentes, caractérisé en ce que le déplacement du ou de chaque organe mobile (20a, 20b) n'est pas proportionnel au déplacement du deuxième élément (14a, 14b) du distributeur correspondant.

## Claims

1. A control device for controlling an actuator (24a) for displacing a moving member (20a) between two limit positions, the actuator being fed with fluid under pressure by a distributor (10a) comprising a first element (12a) connected to the actuator piston rod (22a) together with the moving member (20a) in order to be displaced in synchronism with the moving member, a second element (14a) mounted in sealed manner on the first element (12a), a control (30a) for displacing the second element (14) relative to the first element (12a), with the two elements defining there between a plurality of mutually sealed chambers (48a, 50a) which are suitable firstly for selective connection to a source of fluid under pressure and to an exhaust via the second element (14a), and secondly for connection to the actuator feed duct (36a) via the first element (12a), the control device being characterized in that the second element (14a) of the distributor is associated in sealed manner with a fixed third element (16a) in conjunction with which it defines at least two mutually sealed chambers (62a, 64a), one of which is permanently connected to the source of fluid under pressure, and the other of which is permanently connected to the exhaust, via the third element (16a).

2. A device according to claim 1, characterized in that the chambers (48a, 50a) defined between the first element (12a) and the second element (14a) of the distributor are connected to the chambers (62a, 64a) defined between the second element (14a) and the third element (16a) of the distributor via holes (52a, 54a) passing through the second element (14a).

3. A device according to claim 1 or 2, characterized in that the above-mentioned chambers also include chambers which are isolated in sealed manner from the source of fluid under pressure and from the exhaust.

4. A device according to any preceding claim, characterized in that the moving elements of the distributor are coaxial discs rotatably mounted about their common axis (18a).

5. A device according to any preceding claim, characterized in that the second element (14a) of the distributor constitutes the drive member for the second element (14b) of a second distributor (10b) of the same type and suitable for controlling the displacement of a second member (20b) movable between two limit positions by means of a second actuator (24b).

6. A device according to claims 4 and 5 taken together, characterized in that the peripheral surfaces of the second moving elements (14a and 14b) of the distributors are formed with gear teeth (28a, 28b) in mesh with each other.

7. A device according to any preceding claim, characterized in that the, or each, moving member (20a, 20b) is a flap in an installation for heating and ventilating or for airconditioning the cabin of a motor vehicle.

8. A device according to any preceding claim, characterized in that the displacement of the, or each, moving member (20a, 20b) is not proportional to the displacement of the second element (14a, 14b) of the corresponding distributor.

## Patentansprüche

1. Betätigungseinrichtung für einen Stellzylinder (24a) eines beweglichen Organs (20a) zur Verstellung zwischen zwei Endstellungen, wobei der Stellzylinder von einem Verteiler (10a) mit einem Druckfluid versorgt wird, enthaltend ein erstes Element (12a), das mit der Kolbenstange (22a) des Stellzylinders mit dem beweglichen Organ (20a) verbunden ist, um mit diesem synchron verstellbar zu sein, ein zweites Element (14a), das auf dem ersten Element (12a) abgedichtet montiert ist, eine Verstellsteuerung (30a) für das zweite Element (14a) gegenüber dem ersten Element (12a), wobei die beiden Elemente zwischen sich Kammern (48a, 50a) ausbilden, die gegeneinander abgeschlossen sind und die einerseits dazu eingerichtet sind, über das zweite Element (14a) selektiv mit einer Druckfluidquelle und einem Auslaß verbunden zu werden und die andererseits dazu eingerichtet sind, mit einer Versorgungsleitung (36a) des Stellzylinders über das erste Element (12a) verbunden zu werden, dadurch gekennzeichnet, daß das zweite Element (14a) des Verteilers abgedichtet einem dritten, festen Element (16a) zugeordnet ist, mit welchem es wenigstens zwei voneinander dicht abgetrennte Kammern (62a, 64a) ausbildet, von denen die eine über das dritte Element (16a) ständig mit der Druckfluidquelle und die andere ständig mit dem Auslaß verbunden ist.

2. Vorrichtung nach Anspruch 1, dadurch gekennzeichnet, daß die Kammern (48a, 50a), die zwischen dem ersten Element (12a) und dem zweiten Element (14a) des Verteilers ausgebildet sind, mit den Kammern (62a, 64a), die zwischen dem zweiten Element (14a) und dem dritten Element (16a) des Verteilers ausgebildet sind, über Löcher (52a, 54a) verbunden sind, die das zweite Element (14a) durchqueren.

3. Vorrichtung nach Anspruch 1 oder 2, dadurch gekennzeichnet, daß die vorgenannten Kammern auch Kammern enthalten, die von der Druckfluidquelle und dem Auslaß abgedichtet isoliert sind.

4. Vorrichtung nach einem der vorhergehenden Ansprüche, dadurch gekennzeichnet, daß die beweglichen Elemente des Verteilers koaxiale Scheiben sind, die drehbar um ihre gemeinsame Achse (18a) angeordnet sind.

5. Vorrichtung nach einem der vorhergehenden Ansprüche, dadurch gekennzeichnet, daß das zweite Element (14a) des Verteilers ein Mitnehmerorgan für das zweite Element (14b) eines zweiten Verteilers (10b) gleicher Bauart bildet, der dazu eingerichtet ist, mittels eines zweiten Stellzylinders (24b) die Verstellung eines zweiten beweglichen Organs (20b) zwischen zwei Endstellungen zu steuern.

6. Vorrichtung nach den Ansprüchen 4 und 5, dadurch gekennzeichnet, daß die Umfangsflächen der zweiten beweglichen Elemente (14a und 14b) der Verteiler mit Radverzahnungen (28a, 28b) versehen sind, die ineinander kämmen.

7. Vorrichtung nach einem der vorhergehenden Ansprüche, dadurch gekennzeichnet, daß das oder jedes bewegliche Organ (20a, 20b) eine Klappe einer Heiz- und Belüftungsanlage oder Klimaanlage für den Fahrgastraum eines Kraftfahrzeugs ist.

8. Vorrichtung nach einem der vorhergehenden Ansprüche, dadurch gekennzeichnet, daß die Verstellung des oder jedes beweglichen Organs (20a, 20b) nicht proportional zur Verstellung des zweiten Elements (14a, 14b) des zugehörigen Verteilers ist.

FIG.1

FIG.3

FIG.2

FIG.4

FIG.5

FIG.6

FIG.7

FIG.8

FIG.9

FIG.10

FIG.11

**0 182 686**

FIG.12

FIG.13

FIG.14

FIG.15

FIG.16

4

FIG.17

FIG.18

FIG.19

FIG.20

FIG.21

5

FIG. 22

FIG. 23

FIG. 24

FIG. 25